# EUROPÄISCHE PATENTSCHRIFT

(11) **EP 1 826 536 B1**
(45) Veröffentlichungstag und Bekanntmachung des Hinweises auf die Patenterteilung: **28.05.2008**
(21) Anmeldenummer: 07001719.9
(22) Anmeldetag: 26.01.2007
(51) Int. Cl.: G01D 11/30, F16L 3/02

(54) **Klemmvorrichtung**
Clamping device
Dispositif de serrage

(30) Priorität: 24.02.2006 DE 102006009115
(43) Veröffentlichungstag der Anmeldung: 29.08.2007
(73) Patentinhaber: SICK AG, 79183 Waldkirch (DE)
(72) Erfinder: Häringer, Helmut, 79215 Elzach (DE)
(74) Vertreter: Ludewigt, Christoph

(56) Entgegenhaltungen:
- DE-A1- 19 827 765
- DE-U1- 29 922 458

## Beschreibung

Die vorliegende Erfindung betrifft eine Klemmvorrichtung zur Befestigung von Sensoren, insbesondere von optoelektronischen Lichtgittern an einer Befestigungsstange nach dem Oberbegriff des Anspruchs 1.

Klemmvorrichtungen dieser Art werden dazu verwendet, um beispielsweise einen optoelektronischen Sensor innerhalb einer Anlage oder an einer Maschine zu befestigen, mit dem Ziel, dass der Sensor Gegenstände, die sich innerhalb oder in der Nähe der Anlage bzw. der Maschine befinden, erkannt werden. Zu diesem Zweck wird bei einem optoelektronischen Sensor ein Lichtbündel über eine Strecke oder mehrere Lichtbündel über eine Fläche geführt und danach einem Lichtempfänger zugeleitet. Wird dabei der Lichtweg beispielsweise durch einen Gegenstand unterbrochen, so wird dies vom Lichtempfänger erkannt. Die Anlage oder Maschine kann sodann in Abhängigkeit von dieser Information je nach ihrer Aufgabe oder Funktion entsprechend beeinflusst werden. Der Positionierung des Sensors innerhalb der Anlage oder der Maschine und insbesondere der Lichtbündelausrichtung des Sensors kommt dabei eine große Bedeutung zu, d. h. das vom Sensor ausgesandte Licht muss exakt in eine zuvor festgelegte Richtung ausgestrahlt werden, damit nur die Gegenstände erfasst werden, die sich in einem definierten Zielbereich befinden.

Da in vielen Anlagen bzw. Maschinen Rohre, Profilstangen oder dergleichen als wesentliche Konstruktionselemente verwendet werden, ist es bekannt, den oder die Sensoren direkt an diesen Konstruktionselementen zu befestigen. So ist zum Beispiel nach dem Stand der Technik bekannt, die Sensoren mit einer oder zwei aus dem Bereich der Sanitärinstallation bekannten Befestigungsschellen an einer Stange zu befestigen. Aus der DE 299 22 458 zum Beispiel ist es bekannt, mit Hilfe eines Spannbandes ein Aufnahmeelement, in das dann der Sensor eingesetzt wird, an einer Stange anzubringen. Aus der DE 19827765 ist eine Sensorbefestigungsvorrichtung bekannt um einen Sensor an einer Stange zu befestigen.

Alle Befestigungsvorrichtungen dieser Art, die auf allgemeine Standardelemente wie Befestigungsschellen oder Spannbänder zurückgreifen, haben den Nachteil, dass die Ankoppelung des Sensors an das Standardelement nicht optimal ausgeführt werden kann. So ist zum Beispiel bei Verwendung der Befestigungsschellen der Zugang zu den Spannschrauben oft nur von der Seite der Lichtdurchtrittsfläche des Sensors möglich. Dies macht es notwendig, dass bei der Montage des Sensors ein Eingriff in den Lichtbündelbereich notwendig ist, was insbesondere die bei der Befestigung ebenfalls notwendige Justage des Sensors sehr erschwert. Weiterhin von Nachteil bei der Verwendung von Befestigungsschellen ist der Umstand, dass in der Regel für jede Befestigungsschelle zwei Spannschrauben erforderlich sind. Dies erhöht nicht nur die Montagezeit, sondern erfordert einen zusätzlichen Platzbedarf und vergrößert zusätzlich die Verletzungsgefahr, weil diese beiden Spannschrauben oft ungeschützt weit über den Außendurchmesser der Befestigungsstange hinausragen. Diese durch das Konstruktionsprinzip der Befestigungsschelle bedingten Nachteile werden zwar teilweise durch den Einsatz mit den Spannbändern vermieden, dafür ist es hier jedoch notwendig, ein meist teueres, platzerforderndes Aufnahmeelement als Koppelglied zwischen dem Spannband und dem Sensor zu benutzen.

Aufgabe der vorliegenden Erfindung ist daher die Schaffung einer Klemmvorrichtung zur Befestigung von Sensoren an einer Befestigungsstange, die die Anforderungen an die Praxis besser erfüllt, als die bekannten Anordnungen und insbesondere leicht durchführbar, kostengünstig und platzsparend ist und darüber hinaus bei der Montage des Sensors an der Befestigungsstange die Sensorfunktion nicht beeinträchtigt.

Trotz dieser Forderung hinsichtlich geringer Baugröße und niedriger Herstellkosten ist von der Klemmvorrichtung eine möglichst hohe mechanische Stabilität gefordert, gepaart mit einem großen Freiheitsgrad hinsichtlich der Justage des Sensors an der Anlage bzw. in der Maschine.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Erfindungsgemäß weist die Klemmvorrichtung einen Klemmbügel auf, der zusammen mit einem Klemmfuß die Befestigungsstange umgreift. Auf der dem Klemmfuß zugewandten Seite ist im Klemmbügel ein Gewinde vorhanden, in welches eine Klemmschraube, die durch den Sensor und den Klemmfuß geführt ist, eingreift. Der Klemmbügel ist dabei so gestaltet, dass die Befestigungsstange auf der dem Klemmfuß gegenüberliegenden Seite vom Klemmbügel zumindest geringfügig mehr als mittig umgriffen wird. Beim Eindrehen der Klemmschraube in den Klemmbügel wird der Klemmbügel in den Klemmfuß hineingezogen. Da der Klemmbügel jedoch die Befestigungsstange hintergreift wird durch die Klemmschraube der Sensor gegen den Klemmfuß und der Klemmfuß gegen die Befestigungsstange gespannt, so dass auf diesem Wege der Sensor mit der Befestigungsstange kraftschlüssig verbunden ist.

Der Vorteil dieser Klemmvorrichtung ist darin zu sehen, dass nach dem Eindrehen der Klemmschraube mit nur geringem Drehmoment der Sensor an der Befestigungsstange positioniert aber noch drehbar gehalten ist und dass mit dem Festziehen der gleichen Klemmschraube der Sensor an der Befestigungsstange in seiner Ausrichtung fixiert ist.
Gemäß einer bevorzugten Ausgestaltung der Erfindung hat der Klemmbügel hinsichtlich der Umschließung der Befestigungsstange eine so große freie Öffnung, dass bei nicht vollständig eingedrehter Klemmschraube, d. h. wenn der Klemmbügel noch nicht wesentlich in den Klemmfuß eingeführt ist, der Klemmbügel an beliebiger Stelle über die Befestigungsstange gelegt werden kann. Mit dieser vorteilhaften Dimensionierung des Klemmbügels ist es nicht erforderlich, dass die Klemmvorrichtung über eine der beiden Stirnseiten auf die Befestigungsstange aufgereiht werden muss, was insbesondere dann von Vorteil ist, wenn nachträglich zusätzliche Sensoren angebracht werden müssen oder wenn ein Sensor ausgetauscht werden muss.

Ein weiterer Vorteil dieser Erfindung ist darin zu sehen, dass der Klemmfuß die Form eines in Richtung der Befestigungsstange geöffneten U-Profiles besitzt, wobei die innere Öffnung der Nutenbreite so gewählt ist, dass zumindest das mit dem Gewinde versehene Ende des Klemmbügels ohne viel Spiel umschlossen wird. Dadurch werden die beim Anziehen der Klemmschraube auftretenden Drehkräfte am Klemmbügel auf den Klemmfuß übertragen.

In einer speziellen Ausführungsform sind in den beiden an der Befestigungsstange anliegenden Schenkel des Klemmfußes Vertiefungen vorgesehen, so dass nach dem Anziehen der Klemmschraube die Druckkräfte zwischen Klemmfuß und Befestigungsstange auf mehrere Punkte verteilt werden.

Eine besonders günstige Verteilung dieser Druckkräfte wird dann erreicht, wenn die Vertiefungen in den an der Befestigungsstange anliegenden Schenkeln des Klemmfußes die Form eines an den Durchmesser der Befestigungsstange angepassten Kreissegmentes aufweist.
Gemäß einer weiteren Ausführungsform der Erfindung weisen die Vertiefungen in den an der Befestigungsstange anliegenden Schenkeln des Klemmfußes die Form eines stumpfen Keiles oder eines Trapezes auf. Der Vorteil dieser Art der Vertiefung ist darin zu sehen, dass für den Klemmfuß, selbst bei Befestigungsstangen mit unterschiedlichem Außendurchmesser, immer eine definierte, die Verdrehung hemmende Anlage an der Befestigungsstange gewährleistet ist.

Nach einer weiteren vorteilhaften Ausführungsform der Erfindung ist der Klemmbügel und die Auflage des Klemmfußes an der Befestigungsstange so ausgebildet, dass die Klemmvorrichtung auch an Befestigungsstangen angebracht werden können, die keinen runden, sondern beispielsweise einen ovalen oder mehreckigen Querschnitt haben.

Bevorzugt ist die Klemmvorrichtung zum Befestigen und Justieren des optoelektronischen Sensors, bezogen auf die Lichtdurchtrittsfläche, an einer der beiden angrenzenden Seitenflächen angebracht. Dies hat den großen Vorteil, dass die durch den Sensor und den Klemmfuß geführte Klemmschraube, inklusive dem zum Drehen derselben notwendigen Werkzeug, dem Lichtweg des Sensor nicht im Wege steht. Damit ist der Sensor bereits bei der Montage funktionsfähig, d. h. die Sensorfunktion kann als Justagehilfe genutzt werden.

Gemäß einer weiteren Ausgestaltung der Erfindung ist es insbesondere bei Lichtgittern, die in Richtung der Befestigungsstange eine große Ausdehnung aufweisen, vorgesehen, gleichzeitig zwei oder mehrere Klemmvorrichtungen zu verwenden. Damit wird erreicht, dass die Befestigungsstange, d. h. das in der Regel sehr stabile Konstruktionselement der Maschine oder Anlage zur Verbesserung der mechanischen Steifigkeit des eigentlichen Sensors genutzt werden kann.

Die Erfindung wird im Folgenden beispielhaft unter Bezugnahme auf die Zeichnungen beschrieben.

In den Zeichnungen zeigen:
- Figur 1: eine schematische Seitenansicht der Klemmvorrichtung mit einem Ausschnitt von einem Lichtgitter und einer Befestigungsstange;
- Figur 2: eine Schnittdarstellung durch die Klemmvorrichtung, das Lichtgitter und die Befestigungsstange gemäß Fig. 1 im Schnitt (A-A').

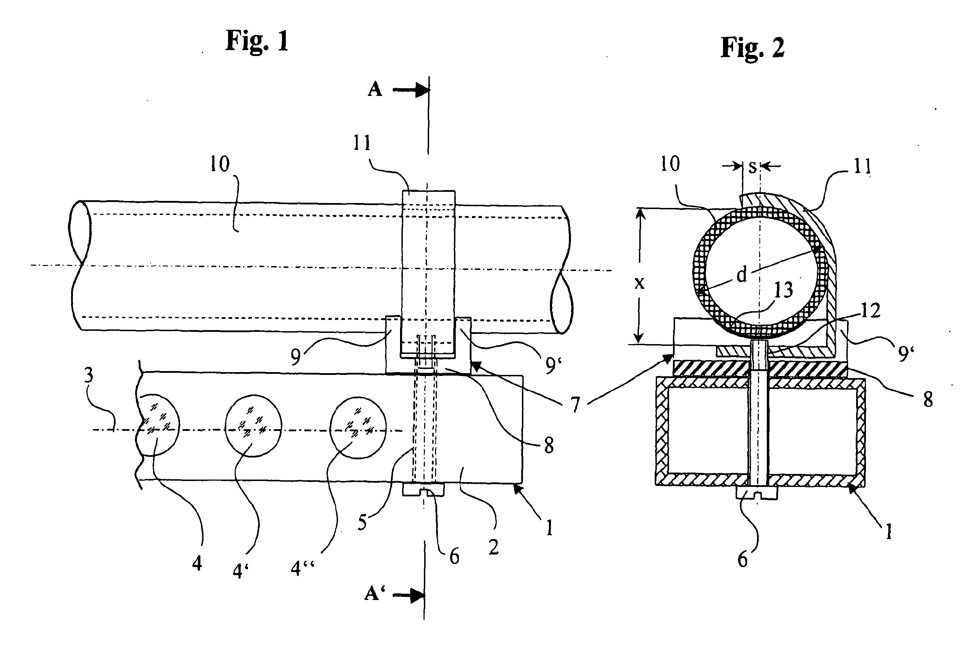

In Fig. 1 ist ein optoelektronischer Sensor 1 in Form eines Lichtgitters ausschnittsweise dargestellt. In einer Lichtdurchtrittsfläche 2 des optoelektronischen Sensors 1 sind entlang einer Linie 3 drei optische Linsen 4, 4' und 4" angeordnet, durch welche jeweils ein Lichtbündel aus dem Sensor 1 austritt, bzw. in den Sensor eintritt. Im Sensor 1 ist eine Durchgangsbohrung 5 angebracht, durch welche eine Klemmschraube 6 geführt ist. Die Klemmschraube 6 ist in ihrer Länge so dimensioniert, dass sie länger als die Sensorbreite ist und dadurch in einen Klemmfuß 7 hineinreicht. Der Klemmfuß 7 hat in seinem Querschnitt ein U-förmiges Profil, welches von einer dem Sensor zugewandten Sockelfläche 8 und zwei dazu rechwinklig angeordneten Schenkeln 9, 9' gebildet ist. In der Sockelfläche 8 vom Klemmfuß 7 ist ebenfalls ein Durchgangsloch angebracht, durch das die Klemmschraube 6 ebenfalls hindurchreicht. Auf der dem Sensor abgewandten Seite des Klemmfußes 7 ist der Ausschnitt einer Befestigungsstange 10 dargestellt. Diese Befestigungsstange 10 wird von einem Klemmbügel 11 umgriffen. Der Klemmbügel 11 ist so ausgeformt, dass er an einem Ende zwischen den beiden Schenkeln 9, 9' des Klemmfußes 7 beginnt und an der gegenüberliegenden Seite die Befestigungsstange 10 zumindest geringfügig über die Mitte hinaus überdeckt.

In der Schnittzeichnung von Fig. 2 ist das Zusammenwirken von Sensor 1, Klemmschraube 6, Klemmfuß 7, Befestigungsstange 10 und Klemmbügel 11 gut erkennbar. Die Klemmschraube 6 durchdringt den Sensor 1 und die Sockelfläche 8 vom Klemmfuß 7. Innerhalb des Klemmfußes 7 greift die Klemmschraube 6 in ein Gewinde 12, welches im Klemmbügel 11 angebracht ist. Da der Klemmbügel 11 eine lichte Öffnung x aufweist, die größer als der Außendurchmesser d der Befestigungsstange 10 ist, kann der Klemmbügel 11, solange die Klemmschraube 6 noch nicht vollständig eingedreht ist, an beliebiger Stelle über die Befestigungsstange 10 geschoben werden. Erst mit dem Festziehen der Klemmschraube 6 und dem damit einhergehenden Einziehen des Klemmbügels 11 in den Klemmfuß 7, wird die Befestigungsstange 10 gegen eine Vertiefung 13, die in jedem der Schenkeln 9, 9' des Klemmfußes 7 angebracht ist, verspannt. Da der Klemmbügel 11 auf der dem Klemmfuß 7 gegenüberliegenden Seite die Befestigungsstange 10 über die Mitte hinaus um den Betrag s überdeckt, ist sichergestellt, dass nach dem Festziehen der Klemmschraube 6 der Sensor 1 mit der Befestigungsstange 10 kraftschlüssig verbunden ist. Ein Entfernen des Sensors 1 von der Befestigungsstange 10 ist somit erst dann wieder möglich, wenn die Klemmschraube 6 gelöst wurde.

## Patentansprüche

1. Klemmvorrichtung zum Befestigen und Justieren eines optoelektronischen Sensors, insbesondere eines Lichtgitters (1) an einer Befestigungsstange (10), bestehend aus einem Klemmbügel und einem Klemmfuß, **dadurch gekennzeichnet, dass** eine Klemmschraube (6) den Sensor (1) und den Klemmfuß (7) durchdringt und in ein Gewinde (12) an der dem Klemmfuß (7) zugewandten Endseite des Klemmbügels (11) eingreift, dass der Klemmbügel (11) die Befestigungsstange (10) auf der dem Klemmfuß (7) gegenüberliegenden Seite zumindest geringfügig mehr als mittig hintergreift, dass die Befestigunsstange (10) gegen den Klemmfuß (7) verspannt wird und dass die Klemmschraube (6) den Klemmbügel (11) derart in dem Klemmfuß (7) fixiert, dass der Klemmbügel (11) den Sensor (1) zusammenwirkend mit dem Klemmfuß (7) an der Befestigungsstange (10) kraftschlüssig verbindet.

2. Klemmvorrichtung nach Anspruch 1, **dadurch gekennzeichnet, dass** der Klemmbügel hinsichtlich der Umschließung der Befestigungsstange eine so große freie Öffnung aufweist, dass bei nicht vollständig eingedrehter Klemmschraube der Klemmbügel um die Befestigungsstange gelegt werden kann.

3. Klemmvorrichtung nach einem der vorhergehenden Ansprüche, **dadurch gekennzeichnet, dass** der Klemmfuß die Form eines in Richtung der Befestigungsstange geöffneten U-Profiles besitzt, welches zumindest das mit dem Gewinde versehene Ende des Klemmbügels umschließt.

4. Klemmvorrichtung nach einem der vorhergehenden Ansprüche, **dadurch gekennzeichnet, dass** die beiden an der Befestigungsstange anliegenden Schenkel des Klemmfußes Vertiefungen aufweisen, so dass eine definierte Kontaktierung an mehreren Punkten zwischen der Befestigungsstange und dem Klemmfuß gegeben ist.

5. Klemmvorrichtung nach Anspruch 4, **dadurch gekennzeichnet, dass** die Vertiefung an den Schenkeln des Klemmfußes die Form eines an den Durchmesser der Befestigungsstange angepassten Kreissegmentes aufweist.

6. Klemmvorrichtung nach Anspruch 4, **dadurch gekennzeichnet, dass** die Vertiefung an den Schenkeln des Klemmfußes die Form eines stumpfen Keiles oder eines Trapezes aufweist.

7. Klemmvorrichtung nach einem der vorhergehenden Ansprüche, **dadurch gekennzeichnet, dass** der Klemmbügel so geformt ist, dass die Klemmvorrichtung an einer Befestigungsstange mit einem runden, ovalen oder mehreckigen Querschnitt verwendbar ist.

8. Klemmvorrichtung nach einem der vorhergehenden Ansprüche, **dadurch gekennzeichnet, dass** die Klemmvorrichtung zum Befestigen und Justieren eines optoelektronischen Sensors, bezogen auf die Lichtdurchtrittsfläche, an der Rückseite oder einer der beiden Seitenflächen des Sensors angebracht ist.

9. Verwendung von Klemmvorrichtungen nach einem der vorhergehenden Ansprüche, **dadurch gekennzeichnet, dass** bei optoelektronischen Sensoren, die in Richtung der Befestigungsstange eine große Ausdehnung haben, zwei oder mehrere Klemmvorrichtungen gleichzeitig angewendet werden.

## Claims

1. Clamping apparatus for attachment and adjustment of an opto-electronic sensor, in particular of a light grating (1) on an attachment rod (10), comprising a clamping bracket and a clamping foot, **characterized in that** a clamping screw (6) passes through the sensor (1) and the clamping foot (7) and engages in a thread (12) on that end face of the clamping bracket (11) which faces the clamping foot (7), **in that** the clamping bracket (11) engages at least slightly more than centrally behind the attachment rod (10) on the side opposite the clamping foot (7), **in that** the attachment rod (10) is braced against the clamping foot (7), and **in that** the clamping screw (6) fixes the clamping bracket (11) in the clamping foot (7) such that the clamping bracket (11) connects the sensor (1) with a force fit on the attachment rod (10), interacting with the clamping foot (7).

2. Clamping apparatus according to Claim 1, **characterized in that** the clamping bracket has a free opening with respect to the enclosure of the attachment rod which is sufficiently large that the clamping bracket can be moved around the attachment rod when the clamping screw is not screwed in completely.

3. Clamping apparatus according to one of the preceding claims, **characterized in that** the clamping foot is in the form of a U-shaped profile which is open in the direction of the attachment rod and encloses at least that end of the clamping bracket which is provided with the thread.

4. Clamping apparatus according to one of the preceding claims, **characterized in that** the two limbs of the claming foot which rest on the attachment rod have depressions so as to produce a defined contact at a plurality of points between the attachment rod and the clamping foot.

5. Clamping apparatus according to Claim 4, **characterized in that** the depression on the limbs of the clamping foot is in the form of a circular segment which is matched to the diameter of the attachment rod.

6. Clamping apparatus according to Claim 4, **characterized in that** the depression on the limbs of the clamping foot is in the form of an obtuse wedge or a trapezoid.

7. Clamping apparatus according to one of the preceding claims, **characterized in that** the clamping bracket is formed such that the clamping apparatus can be used on an attachment rod with a round, oval or polygonal cross section.

8. Clamping apparatus according to one of the preceding claims, **characterized in that** the clamping apparatus for attachment and adjustment of an opto-electronic sensor is fitted, with respect to the surface through which light passes, to the rear face or one of the two side surfaces of the sensor.

9. Use of clamping apparatuses according to one of the preceding claims, **characterized in that**, in the case of opto-electronic sensors which have a large extent in the direction of the attachment rod, two or more clamping apparatuses are used at the same time.

## Revendications

1. Dispositif de serrage pour la fixation et l'ajustement d'un capteur optoélectronique, notamment d'un réseau optique (1) sur une barre de fixation (10), constitué d'un étrier de serrage et d'un pied de serrage, **caractérisé en ce qu'**une vis de serrage (6) traverse le capteur (1) et le pied de serrage (7), et s'engage dans un taraudage (12) du côté de l'extrémité de l'étrier de serrage (11) orientée vers le pied de serrage (7), **en ce que** du côté opposé au pied de serrage (7), l'étrier de serrage (11) enserre la barre de fixation (10) par l'arrière, au moins légèrement au-delà de l'axe, **en ce que** la barre de fixation (10) est appliquée contre le pied de serrage (7), et **en ce que** la vis de serrage (6) fixe l'étrier de serrage (11) dans le pied de serrage (7) de telle sorte que, conjointement avec le pied de serrage (7), l'étrier de serrage (11) relie le capteur (1) par adhérence de force à la barre de fixation (10).

2. Dispositif de serrage selon la revendication 1, **caractérisé en ce que**, pour enserrer la barre de fixation, l'ouverture libre de l'étrier de serrage est d'une importance telle que, lorsque la vis de serrage n'est pas entièrement vissée, l'étrier de serrage peut être placé autour de la barre de fixation.

3. Dispositif de serrage selon l'une revendications précédentes, **caractérisé en ce que** le pied de serrage a la forme d'un profilé en U ouvert en direction de la barre de fixation, qui entoure au moins l'extrémité pourvue du taraudage de l'étrier de serrage.

4. Dispositif de serrage selon l'une des revendications précédentes, **caractérisé en ce que** les deux branches du pied de serrage s'appliquant contre la barre de fixation comportent des renfoncements, de sorte qu'un contact défini soit assuré en plusieurs points entre la barre de fixation et le pied de serrage.

5. Dispositif de serrage selon la revendication 4, **caractérisé en ce que** le renfoncement pratiqué dans les branches du pied de serrage présente la forme d'un segment circulaire adapté au diamètre de la barre de fixation.

6. Dispositif de serrage selon la revendication 4, **caractérisé en ce que** le renfoncement pratiqué dans les branches du pied de serrage présente la forme d'une clavette tronquée ou d'un trapèze.

7. Dispositif de serrage selon l'une des revendications précédentes, **caractérisé en ce que** l'étrier de serrage est conformé de telle sorte que le dispositif de serrage puisse être utilisé sur une barre de fixation à section transversale circulaire, ovale ou polygonale.

8. Dispositif de serrage selon l'une des revendications précédentes, **caractérisé en ce que**, par rapport à la surface de passage de lumière, le dispositif de serrage pour la fixation et l'ajustement d'un capteur optoélectronique est fixé sur la face arrière ou sur l'une des deux faces latérales du capteur.

9. Utilisation de dispositifs de serrage selon l'une des revendications précédentes, **caractérisée en ce que** deux ou plusieurs dispositifs de serrage sont utilisés simultanément pour des capteurs optoélectroniques ayant une grande extension en direction de la barre de fixation.
